Europäisches Patentamt

European Patent Office

Office européen des brevets

(19)

(11) Numéro de publication: **0 334 442 B1**

(12) **FASCICULE DE BREVET EUROPEEN**

(45) Date de publication de fascicule du brevet: **17.08.94**   (51) Int. Cl.5: **H04B 3/23**

(21) Numéro de dépôt: **89200689.1**

(22) Date de dépôt: **20.03.89**

(54) **Annuleur d'écho pour signal d'écho à phase variable.**

(30) Priorité: **25.03.88 FR 8803938**

(43) Date de publication de la demande:
**27.09.89 Bulletin 89/39**

(45) Mention de la délivrance du brevet:
**17.08.94 Bulletin 94/33**

(84) Etats contractants désignés:
**BE DE FR GB IT SE**

(56) Documents cités:
**EP-A- 0 036 696         EP-A- 0 042 446
EP-A- 0 174 749         GB-A- 2 050 127
GB-A- 2 159 376         US-A- 4 682 358**

**NACHRICHTENTECHNISCHE ZEITSCHRIFT
N.T.Z., vol. 36, no. 11, novembre 1983, pages
726-732, Berlin, DE; W. GRÖSCH et al.: "Ein
Vollduplexmodem mit adaptiver Sprecherecholöschung zur Übertragung von 4800 bit/s
über Fernsprechkanäle"**

**IEEE INTERNATIONAL CONFERENCE ON
COMMUNICATIONS ICC '87, COMMUNICA-
TIONS-SOUND TO LIGHT, Seattle, Washington, 7-10 juin 1987, vol. 3, pages 1724-1727,
IEEE, New York, US; C.-P.J. TZENG: "A technique that cancels implementation-depen-**
dent offset in adaptive filers"

(73) Titulaire: **TRT TELECOMMUNICATIONS RA-
DIOELECTRIOUES ET TELEPHONIOUES
88 rue Brillat Savarin
F-75013 Paris (FR)**

(72) Inventeur: **Salle, Bertrand
SOCIETE CIVILE S.P.I.D.
209 rue de l'Université
F-75007 Paris (FR)**

(74) Mandataire: **Chaffraix, Jean et al
Société Civile S.P.I.D.
156, Boulevard Haussmann
F-75008 Paris (FR)**

EP 0 334 442 B1

**Description**

La présente invention concerne un annuleur d'écho pour signal à phase variable.

Les annuleurs d'écho trouvent d'importantes applications. Un annuleur d'écho peut être utilisé dans un équipement émetteur-récepteur par exemple un modem dont les voies unidirectionnelles émission et réception, formant ensemble un circuit quatre fils, sont souvent couplées par un circuit de couplage, appelé jonction hybride, de façon que l'équipement ait avec l'extérieur un accès deux fils. On sait que lorsqu'on établit une liaison entre deux équipements émetteur-récepteur par leurs accès deux fils, il peut se produire qu'une fraction du signal émis par la voie émission du même équipement, par suite d'imperfections des jonctions hybrides ou par suite de réflexions de signaux dans la liaison retourne intempestivement dans la voie réception de l'équipement. Un annuleur d'écho a pour but d'annuler automatiquement ce signal intempestif ou signal d'écho qui apparaît dans la voie réception. L'avantage de cette opération d'annulation d'écho est de permettre une transmission simultanée entre deux équipements émetteur-récepteur reliés par leurs accès deux fils. Ces équipements émetteur-récepteur (modems) sont utilisés pour la transmission de données.

Un signal d'écho à phase variable résulte par exemple d'une dérive de fréquence qui peut se produire, lorsque dans la liaison entre deux équipements émetteur-récepteur, est incluse une section dans laquelle la transmission est effectuée par deux systèmes à courants porteurs travaillant respectivement pour les deux sens de transmission. Si les fréquences utilisées pour la modulation et la démodulation dans chaque système à courants porteurs ne sont par rigoureusement les mêmes, un signal émis par la voie émission d'un équipement émetteur-récepteur peut produire dans la voie réception de cet équipement un signal d'écho qui, ayant transité par les systèmes à courants porteurs, a une fréquence différente de celle du signal émis et donc une phase variable dans le temps.

Des annuleurs d'écho pour annuler un signal d'écho à phase variable sont décrits notamment dans le brevet français 2 479 617 au nom de la demanderesse et dans le brevet US 4 682 358.

On demande de plus en plus à ce genre de dispositifs des performances accrues. Une des causes qui gêne l'amélioration de celles-ci est la présence d'une composante continue qui peut apparaître dans le signal d'erreur utilisé pour le réglage de ces annuleurs. Il est déjà connu de minimiser dans des annuleurs d'écho cette composante continue. On pourra à ce sujet consulter le document de brevet européen EP-A-0 174 749 bien que ce dernier ne concerne pas un annuleur d'écho à phase variable. Cependant il faut prévoir d'autres mesures si l'on veut avoir des performances encore meilleures.

L'invention propose un annuleur d'écho pour signal d'écho à phase variable pour lequel on a prévu des mesures supplémentaires pour des performances particulièrement bonnes.

Selon l'invention, un annuleur d'écho pour signal à phase variable $\Phi(n)$ connecté entre deux voies unidirectionnelles émission et réception est remarquable en ce qu'il comprend :

- pour former une réplique du signal d'écho $\epsilon$, un filtre adaptatif coopérant avec un organe de déphasage pour déphaser le signal du filtre adaptatif,
- un organe de soustraction inséré dans une desdites voies pour fournir un signal de différence entre le signal d'écho et sa réplique,
- un circuit suppresseur de composante continue du signal de différence, opérant par calcul adaptatif, qui est destiné à fournir une grandeur de réglage en direction du filtre adaptatif et de l'organe de déphasage,
- un organe d'estimation de déphasage pour fournir une grandeur de réglage pour l'organe de déphasage à partir du signal de différence, organe formé de :
  . un organe d'estimation de phase $\widehat{\Phi}(n)$ et $\Delta\widehat{\Phi}(n)$ pourvu de moyens pour effectuer des opérations du genre :

$$\widehat{\Phi}(n+1) = \widehat{\Phi}(n) - \gamma.e(n).\mathrm{Im}\{\epsilon\} + \Delta\widehat{\Phi}(n)$$
$$\Delta\widehat{\Phi}(n+1) = \Delta\widehat{\Phi}(n) - \delta.e(n).\mathrm{Im}\{\widehat{\epsilon}\}$$

où $\mathrm{Im}\{\widehat{\epsilon}\}$ représente la partie imaginaire de la réplique d'écho,
$\gamma$, $\delta$ sont des paramètres,
  . un organe convertisseur pour transformer $\widehat{\Phi}(n)$ en grandeur de réglage pour l'organe de déphasage,
  . un dispositif d'intégration pour intégrer $\Delta\widehat{\Phi}(n)$ afin de fournir une grandeur $\overline{\Delta\Phi}(n)$ utilisable pour l'organe d'estimation de phase en effectuant l'opération :

$$\overline{\Delta\Phi}(n) = m.\Delta\widehat{\Phi}(n-1) + (1-m).\overline{\Delta\Phi}(n-1)$$

où m est une constante inférieure à 1 (m<1),

$\overline{\Delta\Phi}(n)$ :          valeur de l'écart de phase intégré à l'instant t,

$\Delta\hat{\Phi}(n-1)$ :        valeur antérieur de l'écart de phase,

$\overline{\Delta\Phi}(n-1)$ :        valeur antérieure de l'écart de phase intégré.

Ainsi grâce à ces mesures, un annuleur d'écho conforme à l'invention présente d'excellentes performances. On notera que celles-ci sont obtenues grâce à la présence du dispositif d'intégration qui élimine le bruit sur les écarts de phase et qui apporte une amélioration d'autant plus sensible que la composante continue est supprimée.

On peut encore améliorer les performances de l'annuleur d'écho, selon une autre caractéristique de l'invention, l'organe d'estimation étant pourvu, en outre, de commutateurs pour changer les valeurs de $\gamma$ et $\delta$ et d'un circuit pour appliquer la valeur $\overline{\Delta\Phi}(n)$ au lieu de $\Delta\hat{\Phi}(n)$ lors de ces changements.

Ainsi, selon cette autre caractéristique, il est possible de régler la phase de la réplique de l'écho très rapidement, en effectuant lesdits changements en des temps convenables.

La description suivante accompagnée des dessins ci-annexés, le tout donné à titre d'exemple non limitatif, fera bien comprendre comment l'invention peut être réalisée.

La figure 1 est un schéma d'un système de transmission produisant un signal d'écho à phase variable.

La figure 2 est le schéma d'un annuleur d'écho pour signal d'écho à phase variable, combiné avec un annuleur d'écho pour signal d'écho à phase fixe conformément l'invention.

La figure 3 montre, en a, une première répartition dans le plan complexe des données traitées par l'annuleur d'écho de l'invention et en b, une autre répartition possible.

La figure 4 montre le détail d'un multiplicateur pour nombres complexes utilisé dans l'annuleur de l'invention.

La figure 5 montre le détail de l'organe de calcul des coefficients de l'annuleur d'écho à phase fixe.

La figure 6 montre le détail de l'organe de calcul des coefficients de l'annuleur d'écho à phase variable.

La figure 7 montre le détail de réalisation de l'organe d'estimation de phase.

La figure 8 montre en fonction du temps les changements des valeurs de gain de l'organe d'estimation de phase.

La figure 9 montre l'évolution de l'écart de phase et de sa valeur intégrée.

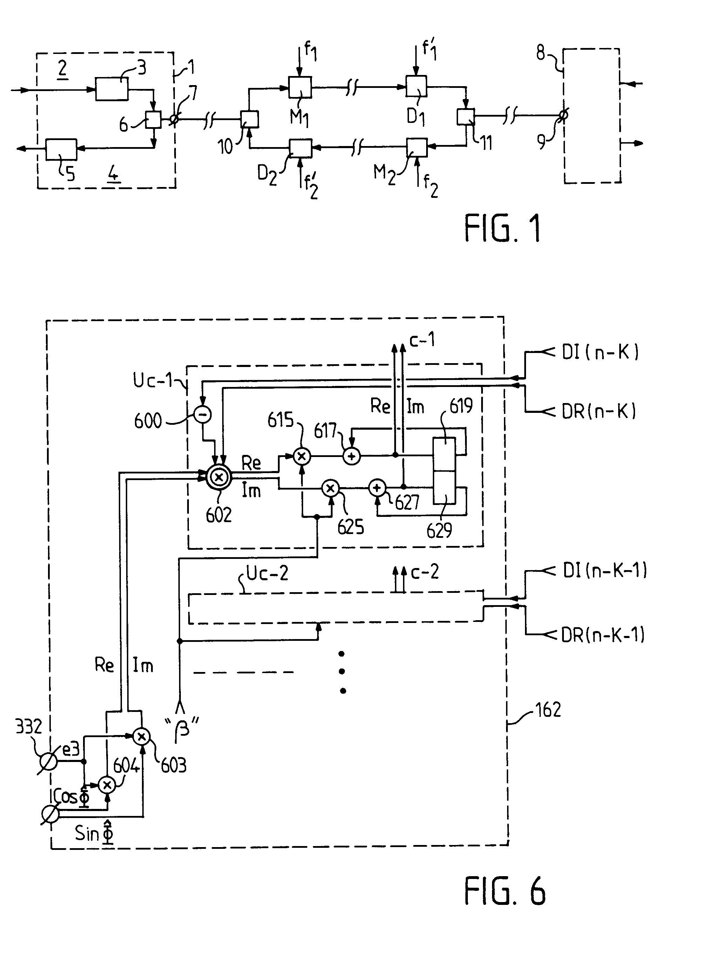

La figure 1 montre à titre d'exemple le schéma de principe d'un système de transmission de données pouvant donner lieu à un signal d'écho à phase variable. Un modem 1 comporte une voie émission 2 munie d'un modulateur 3 recevant des données provenant d'un terminal non représenté et une voie réception 4 munie d'un récepteur 5 fournissant des données à ce terminal. La sortie du modulateur 3 et l'entrée du récepteur 5 sont couplées par l'intermédiaire d'une jonction hybride 6, (ou circuit de couplage) à un accès deux fils du modem représenté par la borne 7. Un modem distant 8 comporte les mêmes éléments non représentés et est muni également d'un accès deux fils représenté par la borne 9. Lorsqu'une liaison est établie entre ces deux modems 1 et 8, une fraction du signal émis par la voie émission 2 peut apparaître dans la voie réception 4 du modem 1 par suite d'imperfections de la jonction hybride 6 et/ou de réflexions de signaux dans la liaison ; ce signal intempestif appelé signal d'écho a la même fréquence que le signal émis quand la liaison entre les deux modems est entièrement réalisée par une ligne de transmission à deux fils. Dans ce cas, ce signal d'écho a une phase invariable et est appelé signal d'écho linéaire. Mais souvent, lorsque la distance entre les modems est importante, on trouve sur la liaison une section de transmission à quatre fils par des systèmes à courants porteurs. Comme l'indique la figure, cette section comporte à ses extrémités deux jonctions hybrides 10 et 11 pour passer de deux fils en quatre fils. Aux extrémités du trajet dans un sens de transmission, on trouve un modulateur $M_1$ et un démodulateur $D_1$ utilisant les fréquences de modulation $f_1$ et $f'_1$. Aux extrémités du trajet dans l'autre sens de transmission, on trouve le modulateur $M_2$ et le démodulateur $D_2$ utilisant les fréquenes de modulation $f_2$ et $f'_2$. Lorsque le modulateur 3 du modem 1 émet, il peut se produire dans sa voie réception 4, un signal d'écho provenant d'imperfections de la jonction hybride 11 et ayant transité dans un sens par le système à courants porteurs $M_1$, $D_1$ et dans l'autre sens par le système à courants porteurs $M_2$, $D_2$. Si les fréquences $f_1$, $f'_1$ et $f_2$, $f'_2$ sont telles que $(f'_1 - f_1) + (f'_2 - f_2) = 0$, le signal d'écho a la même fréquence que celle du signal émis par le modulateur 3 on a affaire à un signal d'écho linéaire à phase invariable ou fixe. Si par contre les fréquences $f_1$, $f'_1$ et $f_2$, $f'_2$ sont telles que $(f'_1 - f_1) + (f'_2 - f_2) \neq 0$, le signal d'écho est affecté d'une dérive de fréquence, de quelques Hz par exemple, et sa phase est variable dans le temps. L'annuleur d'écho de l'invention est un dispositif à inclure dans le modem 1 pour annuler un tel signal à phase variable se produisant dans la voie réception 4. On suppose par la suite que dans cette voie réception 4 un signal d'écho linéaire est équivalent à un signal à phase variable, de phase constante égale à zéro.

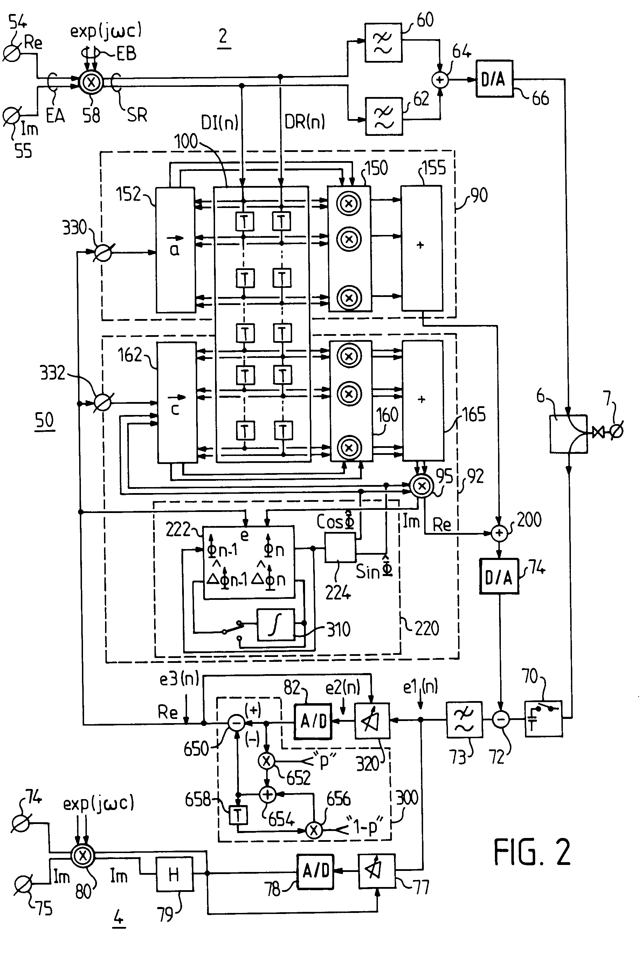

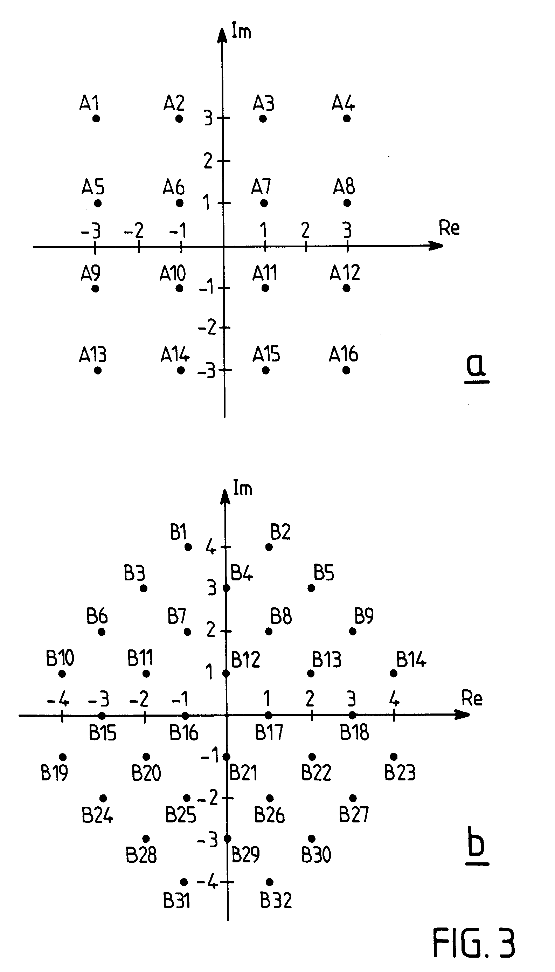

A la figure 2, on a représenté un annuleur d'écho 50 conforme à l'invention. Cet annuleur d'écho va être décrit dans le cadre de la recommandation de l'Avis V32 du CCITT. Cet annuleur d'écho est connecté entre la voie émission 2 et la voie réception 4 d'un modem 1. Aux bornes 54 et 55 les données se présentent sous forme complexe et sous forme numérique. A la borne 54 se trouve la partie réelle Re de la donnée tandis qu'à la borne 55 se trouve la partie imaginaire Im. La figure 3 montre comment les données sont disposées dans le plan complexe. Sur la figure 3, en a, 16 points A1... A16 sont disposés. Chacun de ces points est défini par une composante réelle Re et une composante imaginaire Im. Ces composantes sont rappelées pour les points A1, A2,... A5 dans le Tableau I ci-dessous. En outre, à chacun des points est affecté un mot binaire qui est aussi donné dans ce Tableau I. Ce mot binaire comporte des éléments binaires qui doivent être transmis. En b, sur la figure 3, est représentée une autre répartition où sont disposés 32 points B1... B32. Le Tableau II ci-dessous est relatif aux cinq premiers points à ce dernier ensemble.

**TABLEAU I**

| Points | Composantes | | Mot binaire associé |
|---|---|---|---|
| | Re | Im | |
| A1 | − 3 | 3 | 1 0 1 1 |
| A2 | − 1 | 3 | 1 0 0 1 |
| A3 | + 1 | 3 | 1 1 1 0 |
| A4 | + 3 | 3 | 1 1 1 1 |
| A5 | − 3 | 1 | 1 0 1 0 |
| . | | | |
| . | | | |
| . | | | |

**TABLEAU II**

| Points | Composantes | | Mot binaire associé |
|---|---|---|---|
| | Re | Im | |
| B1 | − 1 | 4 | 1 1 1 1 1 |
| B2 | + 1 | 4 | 1 1 0 0 0 |
| B3 | − 2 | 3 | 0 1 0 0 0 |
| B4 | 0 | 3 | 0 0 1 0 1 |
| B5 | + 2 | 3 | 0 1 0 1 0 |
| . | | | |
| . | | | |
| . | | | |

Les amplitudes de ces composantes Re et Im codées sous forme numérique sont appliquées à une première entrée d'opérande EA d'un multiplicateur de signaux complexes 58. La deuxième entrée d'opérande EB reçoit un signal de porteuse P qui s'écrit :

4

$$P = P_0 \exp(j\omega_c t)$$
$$P = P_0 \cos \omega_c t + jP_0 \sin\omega_c t$$

où

P₀    représente l'amplitude

$\omega_c$,    la fréquence angulaire de cette porteuse (par exemple $2\pi.1800$ rd/s)

t    le temps et

j    est tel que $j^2 = -1$.

A la sortie SR du modulateur 58 apparaissent la partie réelle DR(n) et la partie imaginaire DI(n) des données à émettre.

La sortie SR du multiplicateur 58 est connectée à l'entrée de l'annuleur d'écho 50. Avant d'être émises les données DR(n) et DI(n) sont filtrées respectivement par deux filtres numériques passe-bas 60 et 62, le filtre 60 étant affecté à la composante réelle du nombre à la sortie SR et le filtre 62 à sa composante imaginaire.

Un additionneur 64 effectue la somme des nombres fournis par les filtres 60 et 62. Un convertisseur numérique-analogique 66 élabore le signal effectivement transmis à la borne 7 via le circuit de couplage 6. Le circuit de couplage 6 est connecté aussi à la voie réception 4. Un circuit d'échantillonnage-blocage 70 fournit des échantillons analogiques du signal reçu provenant du circuit de couplage 6. Chacun des échantillons passe par un organe de soustraction pour signaux analogiques 72 pour être débarrassé de l'écho reconstitué par l'annuleur 50. Un filtre passe-bas 73 élimine les discontinuités du signal échantillonné qui apparaît à la sortie de l'organe 72. Le signal e1(n) à la sortie de l'organe 73 est utilisé pour la restitution des données transmises dont la partie réelle apparaît à la borne 74 et la partie imaginaire à la borne 75. Pour cela, le signal e1(n) est d'abord appliqué à un amplificateur à gain variable 77 ; puis le signal de sortie de l'amplificateur 77 est converti en signal numérique au moyen d'un convertisseur analogique-numérique 78. Ce signal numérique issu du convertisseur 78 est appliqué, d'une part, à la commande de gain de l'amplificateur 77 et d'autre part, à l'entrée d'un transformateur d'Hilbert 79 qui élabore ainsi la composante imaginaire de ce signal numérique. Ainsi un démodulateur 80 recevant cette composante imaginaire et la composante réelle provenant du convertisseur 78 fournit les données aux bornes 74 et 75 en fonction d'un signal de porteuse. Ce démodulateur 80 se présentant sous la forme d'un multiplicateur de nombres complexes effectue l'opération inverse de celle du multiplicateur 58 en multipliant par le signal $P_0 \exp(j\omega_c)$ les composantes réelle et imaginaire citées en dernier lieu, selon les règles de la multiplication complexe.

Pour régler l'annuleur d'écho 50, on dérive un signal e2(n) du signal e1(n) et on le transforme en signal numérique e3(n) au moyen d'un convertisseur analogique-numérique 82.

On notera que les convertisseurs 78 et 82 fonctionnent respectivement au rythme des données reçues et des données émises.

L'annuleur d'écho 50, dans cet exemple de réalisation décrit, est formé de deux parties 90 et 92. La partie 90 annule l'écho à phase fixe, c'est-à-dire celui qui ne présente pas de phase variable et qui est dû à la jonction hybride 10 (figure 1) et la partie 92 annule l'écho présentant une phase variable et dû à la jonction hybride 11 située plus loin.

La partie 90 est formée d'un filtre transversal tandis que la partie 92 comporte, outre une partie transversale, un circuit déphaseur 95 constitué par un multiplicateur de nombres complexes. Les filtres transversaux des parties 90 et 92 utilisent la même ligne à retard 100 dont le rôle est de stocker un certain nombre de données successives fournies à la sortie SR du modulateur 58 et apparaissant en des périodes de temps T. Comme l'écho à annuler par la partie 90 est dû à un obstacle proche, le temps de stockage sera bien moins élevé que celui utilisé pour la partie 92. Autour de cette ligne à retard 100 la partie 90 comporte un premier banc de pondération 150 qui multiplie différentes données représentées par leur partie réelle DR(n), DR(n-1),... DR(n-nF) et leur partie imaginaire DI(n), DI(n-1),... DI(n-nF), par une première série de coefficients a-0, a-1,... a-nf élaborés par un premier organe de calcul 152. Un premier organe d'addition 155 additionne tous les résultats fournis par le banc 150 pour fournir à sa sortie une réplique de l'écho à phase fixe estimé.

De la même manière la partie 92 comporte un deuxième banc de pondération 160 qui multiplie différentes données représentées par leur partie réelle DR(n-K), DR(n-K-1),... DR(n-K-nV) et leur partie imaginaire DI(n-K), DI(n-K-1),... DI(n-K-nV), par une deuxième série de coefficients c-0, c-1,... c-nv élaborés par un deuxième organe de calcul 162. Un deuxième organe d'addition 165 additionne les résultats fournis par le banc 160 pour les fournir au circuit déphaseur 95. Un additionneur 200 additionne les répliques d'écho fixe et variable apparaissant aux sorties du premier organe d'addition 155 contenu dans la partie 90 et du circuit déphaseur 95 contenu dans la partie 92. Ces répliques additionnées par l'additionneur 200 sont converties par le convertisseur 74 pour supprimer les signaux d'écho à phase variable et à phase fixe. Pour déterminer le décalage de phase à apporter au signal de sortie du deuxième organe d'addition 165, on a prévu un circuit d'estimation de déphasage 220 qui est formé d'un organe d'estimation de phase 222 et d'un organe de transcodage 224 qui fournit, à partir de l'angle de phase $\hat{\Phi}(n)$ élaboré par l'organe 222 les grandeurs $\cos\hat{\Phi}(n)$ et $\sin\hat{\Phi}(n)$ nécessaires pour le fonctionnement du circuit déphaseur 95.

Pour améliorer le fonctionnement d'un tel annuleur d'écho, l'invention préconise des mesures.

Une première mesure consiste à prévoir un circuit suppresseur de composante continue 300 du signal e2(n).

Une deuxième mesure consiste, pour l'organe d'estimation de phase 222 du type opérant sur des écarts de phase $\Delta\hat{\Phi}(n)$, à prévoir un dispositif d'intégration 310 de ces écarts de phase.

Une troisième mesure consiste à prévoir un circuit de commande automatique de gain formé d'un amplificateur à gain variable 320 qui est placé entre l'entrée du convertisseur analogique-numérique 82 et la sortie du filtre 73 et dont le gain dépend généralement du signal de différence et plus particulièrement du signal e3(n).

Il convient de bien noter que la demanderesse s'est rendue compte que ces mesures initialement prévues pour la partie 92 profitaient également à la partie 90 de sorte que l'invention fournit un annuleur d'écho particulièrement efficace rapidement, tant pour le signal d'écho à phase fixe que pour le signal d'écho à phase variable. Le signal d'erreur utilisé pour les parties 90 et 92 est le signal e3(n) présent à la sortie du circuit suppresseur de composante continue 300 opérant de préférence sur des signaux numériques fournis par le convertisseur 82. Ce signal est appliqué aux entrées de signal d'erreur 330 et 332 des parties 90 et 92.

On décrit maintenant plus en détail l'annuleur d'écho conforme à l'invention et montré à la figure 2.

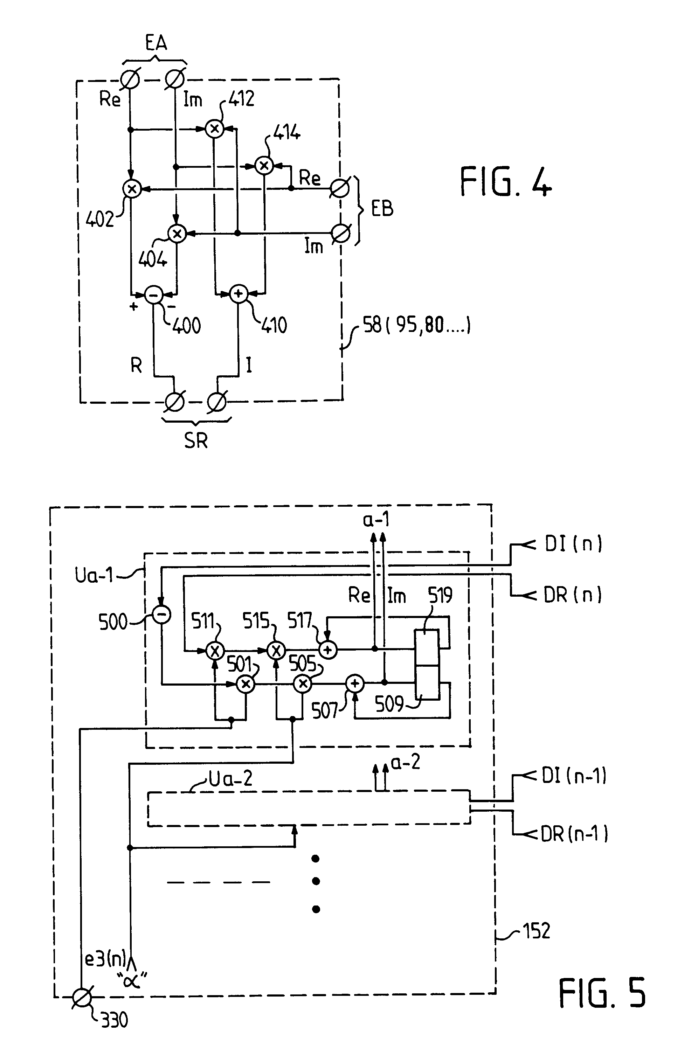

Tout d'abord, on détaille la structure d'un multiplicateur de signaux complexes 58. Il va de soi que les autres multiplicateurs de nombres complexes utilisés dans l'invention ont la même structure. On se rapporte à la figure 4. La partie réelle du résultat à la sortie SR du multiplicateur 58 apparaît à la sortie d'un organe de soustraction 400 muni d'une entrée ( + ) pour recevoir le résultat d'un multiplicateur 402 et d'une entrée (-) pour recevoir le résultat d'un multiplicateur 404. Le multiplicateur 402 effectue le produit des composantes réelles des nombres présents aux entrées EA et EB. Le multiplicateur 404 effectue le produit des composantes imaginaires des nombres aux entrées EA et EB. La partie imaginaire du résultat à la sortie SR apparaît à la sortie d'un organe d'addition 410 munie de deux entrées pour recevoir les résultats de deux multiplicateurs 412 et 414. Le multiplicateur 412 effectue le produit de la composante réelle du signal à l'entrée EA avec la composante imaginaire du signal à l'entrée EB. Le multiplicateur 414 effectue le produit de la composante réelle du signal à l'entrée EB avec la composante imaginaire du signal à l'entrée EA.

La figure 5 montre le détail de réalisation de l'organe de calcul 152. Cet organe comporte "nf" unités de calcul Ua-0 à Ua-nf dont chacune détermine une des valeurs des coefficients a-0 à a-nf. Sur la figure 5, seule l'unité Ua-1 est représentée, la structure des autres unités étant identique à celle-ci. Pour calculer a-1, on utilise les données Dr(n) et DI(n) qui se trouvent à l'entrée de la ligne à retard 100. Pour calculer a-2, on utilise les données DR(n-1) et DI(n-1) qui sont retardées d'un temps T par rapport aux données DR(n) et DI-(n) et ainsi de suite pour les "nf + 1" coefficients. La donnée DI(n) est changée de signe par un inverseur 500, conformément aux algorithmes qui seront explicités par la suite, puis cette partie imaginaire DI(n) est multipliée au moyen d'un multiplicateur 501 par le signal d'erreur e3(n) appliqué à son entrée 330 et le résultat est encore multiplié, au moyen d'un multiplicateur 505, par une constante "$\alpha$". Puis, pour fournir la partie imaginaire de a-1, le résultat de la multiplication effectuée par 505 est ajouté par un additionneur 507 à un résultat antérieur contenu dans un registre 509. La partie réelle DR(n) est multipliée, au moyen d'un multiplicateur 511 par la valeur e3(n), multipliée encore au moyen d'un multiplicateur 515 par la valeur "$\alpha$" et additionnée par un additionneur 517 à un résultat antérieur contenu dans un registre 519 couplé au registre 509. La partie réelle de a-1 est fournie par le résultat de l'additionneur 517.

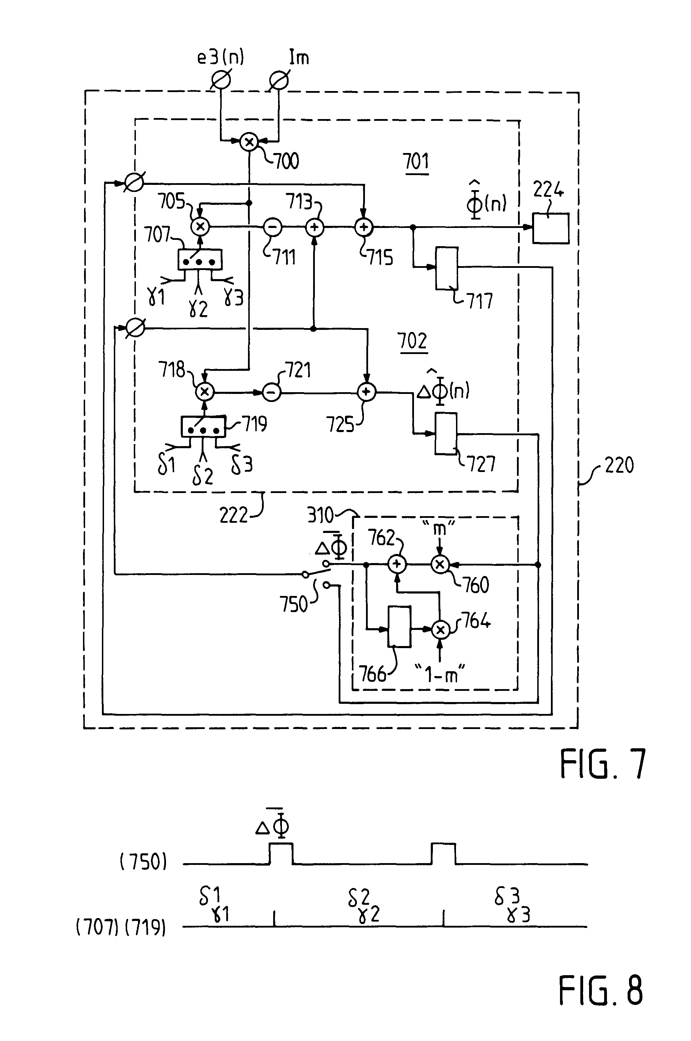

La structure de l'organe 162 est montrée à la figure 6. Cet organe comporte "nv" unités de calcul Uc-1 à Uc-nv de structure identique dont chacune détermine une des valeurs des coefficients c-1 à c-nv. Sur la figure 6 seule l'unité Uc-1 est représentée en détail. Pour calculer c-1 on utilise les données DI(n-K) et DR-(n-K) qui ont été retardées d'un temps KT compatible avec le retard d'écho que l'on veut annuler. Pour calculer c-2 on utilise les données DI(n-K-1) et DR(n-K-1) qui sont retardées d'un temps T par rapport à DI-(n-K) et DR(n-K) et cela ainsi de suite pour les "nV-1" autres coefficients.

La donnée DI(n-K) est tout d'abord changée de signe par l'inverseur 600. Le nombre complexe formé de la partie réelle DR(n-K) et du nombre imaginaire considéré à la sortie de l'inverseur 600, soit -(DI(n-K)), sont multipliés au moyen d'un multiplicateur de nombres complexes 602 à un nombre complexe dont la partie imaginaire est issue d'un multiplicateur 603 et dont la partie réelle provient d'un multiplicateur 604. Les multiplicateurs 603 et 604 multiplient le signal e3 appliqué à la borne 332 par, respectivement, le sinus et le cosinus de l'angle de déphasage fournis par l'organe de transcodage 224. La partie réelle du résultat fourni par le multiplicateur complexe 602 est multipliée, au moyen d'un multiplicateur 615, à une constante "$\beta$" puis le résultat est additionné au moyen d'un additionneur 617 à la partie réelle de la valeur d'un coefficient antérieur contenu dans un registre 619. De même, la partie imaginaire du produit effectué par le multiplicateur 602 est multipliée, au moyen d'un multiplicateur 625, à la constante "$\beta$". Le résultat de 625 est additionné par l'additionneur 627 à la partie imaginaire de la valeur c-1 contenue dans un registre 629 couplé au registre 619. La partie réelle du coefficient c-1 est prélevée à la sortie de l'additionneur 617 et sa partie imaginaire à la sortie de l'additionneur 627.

L'organe suppresseur de composante continue 300 est formé tout d'abord d'un organe de soustraction 650 connecté en sortie du convertisseur 82. La grandeur à la sortie du convertisseur 82 est multipliée au moyen d'un multiplicateur 652 par un grandeur "p" telle que p≪1. Le résultat fourni par ce multiplicateur est appliqué à une entrée d'un organe d'addition 654 dont l'autre entrée reçoit le résultat d'un multiplicateur 656 qui multiplie par "1-p" le nombre à la sortie d'un organe de retard 658 connecté à la sortie de l'organe 654 et prévu pour amener un retard T. Le nombre à la sortie de l'organe 654 est appliqué à l'entrée (-) de l'organe 650 pour ainsi enlever la composante continue du signal appliqué à l'entrée (+), provenant du convertisseur 82.

A la figure 7, on a représenté en détail le circuit d'estimation de déphasage 220. Ce circuit est formé, tout d'abord, d'un organe d'estimation de phase 222 muni d'entrées pour recevoir le signal de différence e3(n) et aussi la partie imaginaire du résultat de l'opération élaborée par le multiplicateur 95. Ces deux grandeurs sont multipliées ensemble par un multiplicateur 700 dont le résultat est utilisé par deux branches de calcul 701 et 702 relatives respectivement à la phase $\hat{\Phi}$(n) et à sa variation $\Delta\hat{\Phi}$(n).

Le résultat de l'opération du multiplicateur 700 est appliqué dans la branche 701 à un multiplicateur 705 pour être multiplié par un des nombres $\gamma$1, $\gamma$2, $\gamma$3 provenant d'un multiplexeur 707. Le résultat du multiplicateur 705 est ensuite inversé par un inverseur 711. Un additionneur 713 effectue l'addition du nombre à la sortie de l'inverseur 711 avec un nombre issu de la branche 702. Un additionneur 715 additionne le nombre à la sortie de l'additionneur 713 avec la phase précédente $\hat{\Phi}$(n-1) contenue dans un registre 717 prévu pour enregistrer le résultat de sortie de cet additionneur 715. L'organe de transcodage 224 effectue, par conversion de code, les opérations cos$\hat{\Phi}$(n) et sin$\hat{\Phi}$(n) à partir de la phase $\hat{\Phi}$(n) estimée en sortie de 715.

Le résultat de l'opération effectuée par le multiplicateur 700 est appliqué aussi dans la branche 702 à un multiplicateur 718 pour être multiplié par un des nombres $\delta$1, $\delta$2 et $\delta$3 provenant d'un multiplexeur 719. Puis le résultat du multiplicateur 718 est ensuite inversé par un inverseur 721. Un additionneur 725 additionne le nombre à la sortie de l'inverseur 721 avec l'écart de phase précédent qui est, soit $\Delta\hat{\Phi}$(n-1) contenu dans un registre 727 prévu pour enregistrer le résultat de l'additionneur, soit $\overline{\Delta\Phi}$ issu du dispositif d'intégration 310. Ce choix est déterminé par la position d'un commutateur 750.

Le dispositif d'intégration 310 est formé d'un multiplicateur 760 pour multiplier par "m" (m<1) l'écart de phase $\Delta\hat{\Phi}$(n-1) contenu dans le registre 727. Un additionneur 762 additionne le résultat de ce multiplicateur 760 avec le résultat d'un multiplicateur 764. Ce multiplicateur 764 multiplie par "1-m" un nombre contenu dans un registre 766 prévu pour enregistrer le nombre à la sortie de l'additionneur 762. La sortie de l'additionneur 762 constitue la sortie du dispositif d'intégration 310.

La figure 8 montre la manière dont sont manoeuvres les multiplexeurs 707 et 719 ainsi que le commutateur 750. Sur cette figure on se rend compte que la grandeur $\overline{\Delta\Phi}$ provenant du dispositif d'intégration 310 est utilisée comme valeur initiale pour l'organe d'estimation 222 lorsque les valeurs aux sorties des multiplexeurs passent des valeurs $\delta$1, $\gamma$1 aux valeurs $\delta$2, $\gamma$2 et passent des valeurs $\delta$2, $\gamma$2 aux valeurs $\delta$1, $\gamma$3.

La présente invention repose sur les considérations théoriques suivantes, concernant plus particulièrement les calculs effectués dans la partie 92 (figure 2), la partie 90 étant indépendante.

On considère l'instant "n". A cet instant l'écho à phase variable $\epsilon$(n) au niveau de l'échantillonneur bloqueur 70 s'écrit :

$$\epsilon(n) = Re\ \{\sum_{q=0}^{N-1} D(n-q).h(q).exp[j\Phi(n)]\} \qquad (1)$$

En utilisant la notation vectorielle, ces N échantillons peuvent être considérés comme les composantes d'un vecteur $\vec{D}$(n) tel que :

$$\vec{D}(n) \;=\; \begin{bmatrix} D(n) \\ D(n-1) \\ . \\ . \\ D(n-N+1) \end{bmatrix}$$

A ces N échantillons correspondent les éléments de la réponse impulsionnelle du chemin d'écho ; le vecteur $\vec{h}$ représentant cette réponse impulsionnelle s'écrit :

$$\vec{h} \;=\; \begin{bmatrix} h(0) \\ h(1) \\ . \\ . \\ h(N-1) \end{bmatrix}$$

Le vecteur transposé de $\vec{D}$(n), noté $^t\vec{D}$(n), s'écrit :

$$^t\vec{D}(n) \;=\; [\,D(n),\; D(n-1),\ldots\, D(n-N+1)\,]$$

L'équation (1) peut alors s'écrire :

$$\varepsilon(n) \;=\; \mathrm{Re}[\,^t\vec{D}(n).\vec{h}(n).\exp[\,j\phi(n)\,]\,] \qquad\qquad (2)$$

Soit $\vec{c}$ le vecteur des coefficients calculés par l'organe 162 :

$$\vec{c} \;=\; \begin{bmatrix} c-1 \\ c-2 \\ . \\ . \\ c-nV \end{bmatrix}$$

L'écho estimé $\hat{\varepsilon}$(n) s'écrit alors :

$$\hat{\varepsilon}(n) \;=\; \mathrm{Re}[\,^t\vec{D}(n).\vec{c}(n).\exp[\,j\hat{\phi}(n)\,]\,] \qquad\qquad (3)$$

A la sortie de l'organe 72, le signal résiduel e(n) s'écrit :

$$e(n) \;=\; \varepsilon(n) - \hat{\varepsilon}(n) \qquad\qquad (4)$$
$$= \mathrm{Re}[\,^t\vec{D}(n).\{\vec{h}(n).\exp[\,j\phi(n)\,] - \vec{c}(n).\exp[\,j\hat{\phi}(n)\,]\}\,] \quad (4bis)$$

On montre qu'un processus itératif permet, en ajustant les valeurs de $\vec{c}$ et de $\hat{\phi}$ de minimiser e(n) (plus souvent sa valeur quadratique moyenne).

Ce processus peut être formulé de la manière suivante, par :

$$\vec{c}(n+1) \; = \; \vec{c}(n) \; + \; \beta.e(n).\vec{D}^*(n).\exp[\,j\Phi(n)\,] \qquad\qquad (5)$$

$$\widehat{\Phi}(k+1) \; = \; \widehat{\Phi}(k) \; - \; \gamma.e(n).\text{Im}\{\widehat{\epsilon}(n)\} \; + \; \Delta\widehat{\Phi}(k) \qquad (6)$$

$$\Delta\widehat{\Phi}(k+1) \; = \; \Delta\widehat{\Phi}(k) \; - \; \delta.e(n).\text{Im}\{\widehat{\epsilon}(n)\} \qquad (7)$$

où $D^*(n) = DR(n)-jDI(n)$.

On notera que le calcul de la phase peut être effectué à un rythme plus rapide que celui des coefficients qui est effectué tous les temps T de sorte que pour montrer cela, on a utilisé la lettre "k" au lieu de la lettre "n". La phase $\widehat{\Phi}(k)$ de l'équation (5) est considérée à l'instant "k" le plus proche de. "n".

L'organe 152 effectue :

$$\vec{a}(n+1) \; = \; \vec{a}(n) \; + \; \alpha.e(n).\vec{D}^*(n) \qquad\qquad (8)$$

Les équations (6) et (7) montrent que l'on a affaire à un asservissement de phase du second ordre, de sorte que pour expliquer son fonctionnement on prend pour modèle une boucle de ce type. Pour mieux comprendre ce qui suit, on se reportera à l'article de William C. Lindsey et al, paru dans PROCEEDINGS OF THE I.E.E.E., vol.69, N°4, Avril 1981, pages 410 à 431 et intitulé : "A Survey of Digital Phase-Locked Loops".

Si on appelle e$\phi$(k) l'erreur de phase dans cette boucle résultant d'une phase $\Phi$(k) à l'entrée de cette boucle et si on appelle E(Z) et $\psi$(Z) les transformées en z de e$\phi$(k) et de $\Phi$(k), on peut, en l'absence des perturbations telles que le bruit, déduire E(Z) de $\psi$(Z) selon l'équation suivante (correspondant à l'équation 4-5 dans l'article de Lindsey) :

$$E(Z) \; = \; [1-H(Z)]\psi(Z)$$

où H(Z) représente la fonction de filtrage de la boucle. La boucle du second ordre qui est mise en oeuvre aura pour réponse H(Z) telle que :

$$1-H(Z) \; = \; \frac{(Z-1)^2}{(Z-A)^2+B^2}$$

A, B étant des constantes.

On obtient une équation aux différences :

$$e\phi(k) \; - \; 2A\,e\phi(k\text{-}1) \; + \; (A^2+B^2)\,e\phi(k\text{-}2) \; = \; \Phi(k) \; - \; 2\Phi(k\text{-}1) \; + \; \Phi(k\text{-}2)$$

avec les conditions initiales suivantes :

$$e\phi(-1) \; = \; e\phi(-2) \; = \; 0$$

Les paramètres A et B sont liés aux fréquences propres $\omega_n$ et au facteur d'amortissement $\zeta$ des boucles d'asservissement du second ordre.

$$A \; = \; \exp(-\zeta\omega_n T).\cos(\omega_n T\sqrt{1-\zeta^2})$$
$$B \; = \; \exp(-\zeta\omega_n T).\sin(\omega_n T\sqrt{1-\zeta^2})$$

ce qui donne, pour H(p), p $= j\omega$ :

$$H(p) = \frac{2\zeta\omega_n \cdot p + \omega_n^2}{p^2 + 2\zeta\omega_n \cdot p + \omega_n^2}$$

Pour représenter le comportement d'une telle boucle on simplifie en considérant l'asservissement de phase pour un changement de fréquence angulaire de $Q_0$ rad/sec à l'instant $k = 0$, pour lequel les conditions initiales seraient :

$e\phi(0) = 0$ ; $\omega_0 = 0$ ; $\omega_n = \Phi(n) - \Phi(n-1)$

L'article de Lindsey indique alors (voir Tableau III) que l'erreur de phase $e\phi(k)$ dans ces conditions est :

$$e\phi(k) = Q_0 T \frac{\sin k\mu}{B} \sqrt{A^2 + B^2} \; k$$

où $\mu = tg^{-1}[B/A]$

A cette erreur de phase $e\phi(k)$ correspond une erreur de fréquence $\Delta\omega$ :

$$\Delta\omega = \frac{\partial e\phi(k)}{\partial k} = \frac{Q_0 T}{B} \cdot \exp(-k\zeta\omega_n T) \cdot \omega_n T(\sqrt{1-\zeta^2} \cdot \cos k\mu - \zeta \cdot \sin k\mu)$$

Il faut remarquer que ces équations ne prennent bien sûr pas en compte les perturbations comme le bruit.

La première mesure que préconise l'invention est d'éliminer toute composante continue en provenance des circuits au niveau de l'échantillonneur 70 et du circuit convertisseur 82. En effet, la demanderesse s'est rendue compte que la valeur $e(n)$ mesurée dans le circuit 82 pouvait être de signe erroné selon une probabilité pb qui s'exprimerait par :

$$pb = \frac{\Delta}{||e||}$$

où $\Delta$ est la composante continue
et $||e||$ est la valeur quadratique moyenne de $e(n)$.

Chaque erreur sur le signe de $e(n)$ résulte en un défaut dans le calcul des équations (5), (6) et (7).

Lorsqu'il y a seule présence d'un écho linéaire et d'un annuleur d'écho linéaire, $\Delta$ peut être considéré comme un bruit aléatoire, ce qui fait que les moyens nécessaires pour obtenir une convergence satisfaisante de l'annuleur d'écho peuvent être les suivants :
- réduire B
- réaliser un filtrage passe-haut.

Ces deux méthodes ont été utilisées dans le passé, la réalisation du filtrage passe-haut étant assez simple.

Au contraire, dans les circuits d'asservissement de phase, cette présence va se représenter par une certaine erreur sur les asservissements, erreur qui sera proportionnelle à la composante continue d'une part, et inversement proportionnelle au niveau moyen de l'écho d'autre part.

Le rapport entre cette composante continue d'une part et l'erreur d'autre part agit donc sans que l'asservissement lui-même puisse corriger. Dans ces conditions, si l'on veut obtenir une convergence avec $\Delta\omega_{max}$ de dérive résiduelle, il convient que :

$$\frac{\Delta}{||e||} < aN \cdot \Delta\omega_{max} \cdot T$$

a = facteur multiplicatif

N = nombre d'échantillons utilisés pour asservir le système.

La demanderesse s'est donc aperçu qu'un filtre passe-haut dont les performances soient compatibles (atténuation du niveau jusqu'à -70 dBm par exemple) avec la contrainte énoncée serait de mise en oeuvre complexe et induirait une charge de calcul supplémentaire ou de circuits additionnels.

Afin de corriger ce décalage, le dispositif est donc muni d'un circuit 300 permettant de corriger adaptativement une composante continue à l'entrée des systèmes d'asservissement. Il fournit une grandeur "offset" destinée à neutraliser $\Delta$.

Pour éliminer adaptativement la composante continue, le circuit effectue au rythme échantillon l'opération suivante :

$$\widehat{Offset}(n) = (1-p).\widehat{Offset}(n-1) + p.e2(n)$$

où p est une constante plus petite que 1, $\widehat{Offset}(n)$ est la valeur de la grandeur "Offset" à l'instant n et e2(n) est le signal à l'entrée du convertisseur analogique-numérique 82. Ce circuit est de mise en oeuvre très simple tout en offrant des performances très élevées.

Ceci a pour effet de diminuer $\Delta$.

Or, $aN\Delta\omega_{max}T\|e\|>\Delta$

d'où une diminution de $\Delta\omega_{max}$ possible.

Lors de l'observation de la fréquence maximum sur laquelle peut s'accrocher le circuit d'asservissement, en partant des équations définies précédemment, Lindsey montre que :

$$e\varphi(k) = Q_0 T. \frac{\sin k\mu}{B} \sqrt{\alpha^2+\beta^2}^k; \quad \mu = \omega_n T.\sqrt{1-\zeta^2}$$

Il convient que $e\phi(k)<\pi$ pour que l'asservissement puisse se verrouiller. Etant donné que $e\phi(k)$ a une valeur maximale lorsque $\sin(k\mu) = \sin(\pi/2) = 1$, on obtient pour k la valeur :

$$k' = \frac{\pi/2}{\mu} = \frac{\pi/2}{\omega_n T\sqrt{1-\zeta^2}}$$

et pour cette valeur k' on a :

$$e\varphi(k') \frac{Q_0 T}{B} \exp[-\pi.\zeta/(e\sqrt{1-\zeta^2})]$$

soit finalement pour $e\phi(k') = \pi$ :

$$\frac{B}{Q_0 T} = \frac{1}{\pi} \exp[-\pi.\zeta/(2\sqrt{1-\zeta^2})]$$

On obtient alors les valeurs maximales $Q_{0MAX}$ que l'asservissement peut rattraper :

$$Q_{0MAX} = \frac{\pi B}{T} \exp[\pi.\zeta/(2\sqrt{1-\zeta^2})]$$

Etant donné que B est approximativement proportionnel à $\omega_n$ pour des valeurs faibles de $\omega_n T$, on observe donc que $Q_{0MAX}$ est proportionnel à $\omega_n$, la fréquence normalisée de la boucle, c'est-à-dire qu'une convergence fine ($\omega_n$ petit) passe par $Q_0$ petit.

Or, il est souhaitable que la valeur du décalage en fréquence maximum admissible soit plus importante. Il est prévu, à cette fin, un dispositif permettant de commuter le gain de ses asservissements de façon à permettre une convergence sur un $Q_0$ important dans un premier temps, puis de commuter, après un certain temps au bout duquel il y aura une première convergence, sur des constantes d'asservissement permettant une convergence dans les valeurs limites qui sont fixées selon les caractéristiques de la transmission, dans un deuxième temps. Le dispositif permet par ailleurs d'effectuer plusieurs commutations successives de façon a passer progressivement de la valeur $Q_{0max}$ souhaitée jusqu'à la valeur Q maximum permettant la transmission bidirectionnelle simultanée. Ainsi avec un grand gain on peut rattraper un écart de fréquence de 5 Hz et avec un gain petit on obtient un écart meilleur que 1/1000 de Hz.

Ainsi, on a assuré la bonne convergence des asservissements de phase du point de vue des performances, mais il est faible si l'on considère les durées successives de convergence de chacune des étapes entre chaque commutation, si bien que l'on risque de ne pouvoir converger de façon satisfaisante qu'en dehors des délais impartis par ailleurs.

Pour remédier à cette faiblesse, les asservissements sont pourvus de gains non critiques ($\zeta<1/\sqrt{e}$), si bien qu'une convergence plus rapide va se produire autour de la valeur effective du décalage en fréquence. Cette convergence plus rapide se trouve néanmoins opposée au fait qu'elle se concrétise sous la forme d'oscillations amorties, d'amplitude d'autant plus importante que $\zeta$ est petit.

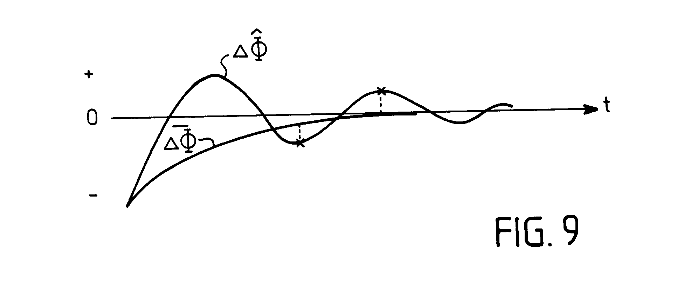

L'invention fournit donc des moyens qui intègrent les valeurs instantanées des décalages en fréquence, sur une durée sensiblement égale à la durée d'une oscillation autour de la valeur nominale. Dans ces conditions, la vitesse de convergence autour de la valeur du décalage ayant été améliorée au prix de battement autour de cette valeur, lorsque l'on procède à la commutation d'un gain de convergence des asservissements au suivant, on substitue à la valeur instantanée $\Delta\Phi_k$ la moyenne de cette valeur effectuée sur un temps égal à un battement, si bien que l'on obtient une convergence équivalente à celle obtenue à partir d'un amortissement critique, mais dans un temps plus court. Ceci est montré à la figure 9 où l'on voit que les fluctuations de $\overline{\Delta\Phi}$ sont le plus souvent bien plus proches de "0" que les fluctuations de $\Delta\hat{\Phi}$. Ainsi en prenant $\overline{\Delta\Phi}$ comme valeur initiale aux changements de gain on s'assure que le temps de convergence est plus court en moyenne.

Ce dispositif a également pour effet de diminuer la prise au bruit des circuits d'asservissement sur la phase.

L'invention propose par ailleurs, comme troisième amélioration, des moyens permettant de faire fonctionner les dispositifs d'asservissement lorsque le niveau de l'écho est faible, particulièrement si la résolution des convertisseurs employés est limitée.

A cet effet, et selon la figure 2, il est placé un dispositif pour amplifier adaptativement l'écho résiduel en ajustant le gain de l'amplificateur 320. L'effet de cette amplification se mesure essentiellement en termes de précision, lors de l'échantillonnage de signal d'écho, de très faibles valeurs. En effet, lorsque l'on reçoit à très faible niveau, il existe une certaine probabilité pour que le signal se situe en dessous du seuil de détection du circuit convertisseur analogique-numérique 82 et que la valeur fournie par ce circuit soit égale à zéro, impliquant que ce circuit 82 ne détecte pas d'énergie. En se qui concerne l'opération de l'annuleur d'écho, il peut éventuellement suffire à assurer la bonne convergence des asservissements que ce circuit 82 fonctionne comme détecteur de signe. Il s'agit alors de détection de signe lorsque le signal d'écho résiduel $e_R$ à l'entrée du circuit convertisseur analogique-numérique 82 a une valeur qui n'est pas inférieure à une certaine valeur minimum $e_{min}$ telle que la valeur fournie par ce circuit 82 soit justement différente de zéro. La probabilité pour que se circuit 82 ne déteste pas d'énergie s'exprime donc par $pb(e_R<e_{min})$.

De cette valeur $e_{min}$, on peut déduire une erreur angulaire $\theta$ telle que l'annuleur d'écho et l'asservissement de phase convergés ne déclenchent pas la détection de signe, c'est-à-dire que $\theta$ sera l'erreur angulaire de $\hat{\epsilon}(n)$ telle que e(n) devienne justement inférieure au seuil de détection du circuit 82.

$\theta$ peut être exprimé tel que -voir équations (2), (4bis), (6) et (7)- :

$$\epsilon(n) = R_e[\,^t\vec{D}(n).\vec{h}(n).\exp[j(\Phi(n)+\theta)]$$

$$= R_e[\,^t\vec{D}(n).\vec{h}(n).\exp(j\Phi(n))]$$

à la sortie du convertisseur 82. $\Phi$ est donc fonction de la précision du convertisseur et du niveau de l'écho, d'où :

$$e(n) = \varepsilon(n) - \hat{\varepsilon}(n)$$

$$= R_e[{}^t\vec{D}(n).\{\vec{h}(n).exp[j(\Phi(n)+\theta)] - \vec{C}(n).exp(j\hat{\Phi}(n))\}]$$

$$= 0$$

et, en fin de convergence, si la partie linéaire de l'annuleur d'écho a correctement convergé, c'est-à-dire si :

$$\vec{h}(n) = \vec{C}(n) \qquad e(n) = 0,$$

pour n = N où N est le nombre d'échantillons pendant la durée totale de la convergence, on peut déduire de l'équation précédente pour e(n) que :

$$\hat{\Phi}(n) = \Phi(n) + \theta$$

En admettant une certaine approximation, on peut évaluer une erreur angulaire par période T ayant une valeur $\theta/N$ de sorte que :

$$\Delta\hat{\Phi}(N) = \Delta\Phi(N) + \frac{\theta}{N}$$

A cette erreur $\theta/N$ correspond une erreur de fréquence $\theta/(NT)$. On en déduit donc que, pour obtenir une convergence satisfaisante, il convient d'obtenir :

$$\theta/(NT) < \Delta\omega_{max}$$

On observe donc que le moyen de réduire $\Delta\omega_{max}$ sans pénaliser le temps de convergense (NT) est de réduire $\theta$, c'est-à-dire la probabilité $pb(e_R < e_{min})$ que le circuit 82 ne détecte pas d'énergie.

Lorsque $e_R$ est petit, la présence du gain adaptatif permet de réduire $e_{min}$ proportionnellement au gain appliqué, donc de réduire $\Delta\omega_{max}$ en fin de convergence.

## Revendications

1.  Annuleur d'écho pour signal à phase variable $\Phi(n)$, connecté entre deux voies unidirectionnelles émission (2) et réception (4), cet annuleur comprenant :
    - pour former une réplique du signal d'écho $\epsilon$, un filtre adaptatif (92) coopérant avec un organe de déphasage (95) pour déphaser le signal du filtre adaptatif,
    - un organe de soustraction (72) inséré dans une desdites voies pour fournir un signal de différence e(n) entre le signal d'écho et sa réplique,
    - un circuit suppresseur de composante continue du signal de différence (300), opérant par calcul adaptatif, qui est destiné à fournir une grandeur de réglage en direction du filtre adaptatif et de l'organe de déphasage,
    - un organe d'estimation de déphasage (200) pour fournir une grandeur de réglage pour l'organe de déphasage à partir du signal de différence e(n), organe formé de :
        . un organe d'estimation de phase $\hat{\Phi}(n)$ et $\Delta\hat{\Phi}(n)$ (222) pourvu de moyens pour effectuer des opérations du genre :

        $$\hat{\Phi}(n+1) = \hat{\Phi}(n) - \gamma.e(n).Im\{\hat{\epsilon}\} + \Delta\hat{\Phi}(n)$$
        $$\Delta\hat{\Phi}(n+1) = \Delta\hat{\Phi}(n) - \delta.e(n).Im\{\hat{\epsilon}\}$$

        où $Im\{\hat{\epsilon}\}$ représente la partie imaginaire de la réplique d'écho, et
        $\gamma$ et $\delta$ sont des paramètres,
        . un organe convertisseur pour transformer $\hat{\Phi}(n)$ en grandeur de réglage (224) pour l'organe de déphasage,
        . un dispositif d'intégration (310) pour intégrer $\Delta\hat{\phi}(n)$ afin de fournir une grandeur $\overline{\Delta\hat{\Phi}}(n)$ utilisable pour l'organe d'estimation de phase en effectuant l'opération :

$$\overline{\Delta\hat{\Phi}}(n) = m.\Delta\hat{\Phi}(n-1) + (1-m).\overline{\Delta\Phi}(n-1)$$

où m est une constante inférieure à 1 (m<1),

$\overline{\Delta\Phi}(n)$ : valeur de l'écart de phase intégré à l'instant n,

$\Delta\hat{\Phi}(n-1)$ : valeur antérieur de l'écart de phase,

$\overline{\Delta\Phi}(n-1)$ : valeur antérieure de l'écart de phase intégré.

2. Annuleur d'écho pour signal à phase variable selon la revendication 1, caractérisé en ce que l'organe d'estimation (222) est pourvu, en outre, de commutateurs (707 et 719) pour changer les valeurs de $\gamma$ et $\delta$ et d'un circuit (750) pour appliquer la valeur $\overline{\Delta\Phi}(n)$ au lieu de $\Delta\hat{\Phi}(n)$ lors de ces changements.

3. Annuleur d'écho pour signal d'écho à phase variable selon l'une des revendications 1 et 2, caractérisé en ce que le circuit suppresseur de composante continue (300) est conçu pour supprimer la composante continue par un signal Offset tel que :

$$\text{Offset } (n) = (1-p).\text{Offset } (n-1) + p.e(n)$$

où

p est une constante plus petite que 1 (p≪1),

e(n) le signal de différence,

Offset (n) la valeur du signal obtenue à l'instant n,

Offset (n-1) la valeur antérieure continue de ce signal.

4. Annuleur d'écho pour signal d'écho à phase variable selon l'une des revendications 1 à 3 dans lequel il est prévu un convertisseur analogique-numérique (82) inséré dans la voie réception et à partir duquel les données transmises sont fournies à l'utilisateur, caractérisé en ce qu'il comporte un circuit de commande automatique de gain formé d'un amplificateur à gain variable (320) qui est placé à l'entrée du convertisseur et dont le gain dépend dudit signal de différence.

5. Annuleur d'écho pour signal à phase variable selon l'une des revendications 1 à 4, caractérisé en ce qu'il comporte une partie d'annulation d'écho à phase fixe (90) réglée aussi à partir dudit signal de différence.

**Claims**

1. Echo canceller for a variable phase signal $\Phi(n)$, connected between two one-way send (2) and receive paths (4), which canceller comprises:
   - for forming a replica of the echo signal $\epsilon$, an adaptive filter (92) which cooperates with a phase shift element (95) for shifting the phase of the adaptive filter signal,
   - a subtracter (72) connected in one of said paths for producing a difference signal e(n) forming the difference between the echo signal and its replica,
   - a suppressing circuit for suppressing the d.c. component of the difference signal (300), operating by adaptive computation, which is intended to produce a control variable in the direction of the adaptive filter and the phase shift element,
   - an estimation circuit for estimating the phase shift (200) for producing a control variable for the phase shift element in response to the difference signal e(n), which estimation circuit is formed by:
     . an estimation circuit (222) for estimating the phase $\hat{\Phi}(n)$ and $\Delta\hat{\Phi}(n)$ including means for effecting operations of the type:

   $$\hat{\Phi}(n+1) = \hat{\Phi}(n) - \gamma.e(n).\text{Im}\{\hat{\epsilon}\} + \Delta\hat{\Phi}(n)$$
   $$\Delta\hat{\Phi}(n+1) = \Delta\hat{\Phi}(n) - \delta.e(n).\text{Im}\{\hat{\epsilon}\}$$

   where $\text{Im}\{\hat{\epsilon}\}$ represents the imaginary component of the echo replica, and

   $\gamma, \delta$ are parameters,

     . a converter element (224) for transforming $\hat{\Phi}(n)$ into a control variable for the phase shift element,

. an integration circuit (310) for integrating $\Delta\hat{\Phi}(n)$ to produce a variable $\overline{\Delta\Phi}(n)$ which can be used for the phase estimation circuit by performing the operation:

$$\overline{\Delta\Phi}(n) = m.\Delta\hat{\Phi}(n\text{-}1) + (1\text{-}m).\overline{\Delta\Phi}(n\text{-}1)$$

where m is a constant smaller than 1 (m < 1),

$\overline{\Delta\Phi}(n)$:        integrated phase deviation at instant n,

$\hat{\Phi}(n\text{-}1)$:        previous value of the phase deviation

$\overline{\Delta\Phi}(n\text{-}1)$:        previous value of the integrated phase deviation.

2. Echo canceller for cancelling a variable-phase echo signal as claimed in Claim 1, in which the estimation circuit (222) further includes switches (707 and 719) to change the values of $\gamma$ and $\delta$ and a circuit (750) for applying the value $\overline{\Delta\Phi}(n)$ *in lieu* of $\Delta\hat{\Phi}(n)$ during these changes.

3. Echo canceller for cancelling a variable-phase echo signal as claimed in one of the Claims 1-2, characterized in that the d.c. component suppressing circuit is designed for suppressing the d.c. component by means of an Offset signal, so that:

$$Off\hat{s}et(n) = (1\text{-}p).Off\hat{s}et(n\text{-}1) + p.e(n)$$

where

p is a constant value less than 1 (p≪1),

e(n) is the difference signal,

Offset(n) is the value of the signal obtained at instant n,

and $Off\hat{s}et(n\text{-}1)$ is the previous value of the d.c. component of this signal.

4. Echo canceller for cancelling a variable-phase echo signal as claimed in one of the Claims 1 to 3 in which an analog-todigital converter (82) is provided inserted in the receive path and on the basis of which the transmitted data are supplied to the user, characterized in that it comprises an automatic gain control circuit formed by a variable gain amplifier (320) which is positioned at the input of the converter and whose gain depends on aforesaid difference signal.

5. Echo canceller for cancelling a variable-phase echo signal as claimed in one of the Claims 1 to 4, characterized in that it comprises a fixed-phase echo cancelling section (90) adjusted also on the basis of aforesaid difference signal.

## Patentansprüche

1. Echokompensator für Echosignale mit veränderlicher Phase $\Phi(n)$, der zwischen zwei einseitig gerichtete Kanäle für Sendung (2) und Empfang (4) angeschlossen wird, und der die folgenden Vorrichtungen enthält:

- einen adaptiven Filter (92), verbunden mit einem Phasenschieber (95), der das Signal aus dem adaptiven Filter in der Phase verschiebt, um daraus ein nachgebildetes Echosignal $\epsilon$ ZU erzeugen,

- eine Subtrahiervorrichtung (72), die die in einen der Kanäle eingesetzt ist, um das Differenzsignal e(n) der Differenz zwischen echtem und nachgebildeten Echosignal zu liefern,

- eine Unterdrückungssehaltung (300) für den Gleichspannungsanteil im Differenzsignal, die mit adaptiver Berechnung arbeitet und zur Weiterleitung einer Stellgröße in die Richtung des adaptiven Filters und des Phasenschiebers bestimmt ist,

- eine Vorrichtung zur Abschätzung der Phasendifferenz (200), um ausgehend vom Differenzsignal an den Phasenschieber eine Stellgroße liefern zu können, wobei diese Vorrichtung aufgebaut ist aus:

  • einer Phasenabsehätzvorrichtung (222) zur Abschatzung der Phase $\hat{\Phi}(n)$ und $\Delta\hat{\Phi}(n)$, versehen mit Mitteln, um Berechnungen der folgenden Art auszuführen:

$$\hat{\Phi}(n+1) = \hat{\Phi}(n)\text{-}\gamma \cdot e(n) \cdot \text{Im}\{\epsilon\} + \Delta\hat{\Phi}(n)$$
$$\Delta\hat{\Phi}(n+1) = \Delta\hat{\Phi}(n)\text{-}\delta \cdot e(n) \cdot \text{Im}\{\epsilon\},$$

wobei Im$\{\hat{\epsilon}\}$ der Imaginäranteil des nachgebildeten Echosignals
und $\gamma$, $\delta$ Parameter sind;

- eine Konvertiervorrichtung zur Wandlung von $\hat{\Phi}(n)$ in eine Stellgröße (224) für den Phasenverschieber;
- eine Integriervorrichtung (310), um $\Delta\hat{\Phi}(n)$ zu integrieren, um daraus eine Größe $\overline{\Delta\Phi}(n)$ für die Phasen-Abschatzvorrichtung anhand der folgenden Berechnung zu erhalten:

$$\overline{\Delta\Phi}(n) = m \cdot \Delta\hat{\Phi}(n-1) + (1-m) \cdot \overline{\Delta\Phi}(n-1),$$

wobei m eine Konstante kleiner als 1 (m < 1) ist,

$\overline{\Delta\Phi}(n)$:           Wert der Phasendifferenz integriert zum Zeitpunkt n,

$\Delta\hat{\Phi}(n-1)$:        früherer Wert der Phasendifferenz,

$\overline{\Delta\Phi}(n-1)$:        früherer Wert der integrierten Phasendifferenz.

2. Echokompensator für Echosignale mit veränderlicher Phase nach Anspruch 1, dadurch gekennzeichnet, daß die Abschätzvorrichtung (222) außerdem mit Schaltern (707 und 719), die die Werte für $\gamma$ und $\delta$ umschalten, versehen ist, sowie mit einer Schaltung (750), die bei solchen Umschaltungen den Wert $\overline{\Delta\Phi}(n)$ anstelle des Werts $\Delta\hat{\Phi}(n)$ anlegt.

3. Echokompensator für Echosignale mit veränderlicher Phase nach einem der Ansprüche 1 und 2, dadurch gekennzeichnet, daß die Unterdrückungsschaltung für den Gleichspannungsanteil (300) so konzipiert ist, daß sie den Gleichspannungsanteil durch ein Offset-Signal der folgenden Art unterdrückt:

$$\hat{Offset}(n) = (1-p) \cdot \hat{Offset}(n-1) + p \cdot e2(n)$$

worin

p eine Konstante kleiner 1 ist (p $\ll$ 1)

e(n) ist das Differenzsignal

$\hat{Offset}(n)$ ist der Wert der Offset-Spannung zum Zeitpunkt n und

$\hat{Offset}(n-1)$ ist der frühere Gleichspannungswert dieses Signals

4. Echokompensator für Echosignale mit veränderlicher Phase nach einem der Ansprüche 1 bis 3, in dem ein in den Empfangskanal eingefügter Analog/Digital-Wandler (82) vorgesehen ist und von dem ausgehend die übertragenen Daten an den Benutzer geliefert werden, dadurch gekennzeichnet, daß er eine automatische Regelung der Verstärkung besitzt, aufgebaut aus einem Verstärker mit veränderlicher Verstärkung (320) am Eingang des A/D-Wandlers und dessen Verstärkung vom Differenzsignal abhängt.

5. Echokompensator für Echosignale mit veränderlicher Phase nach einem der Ansprüche 1 bis 4, dadurch gekennzeichnet, daß er einen Teil für die Kompensation von Echosignalen mit fester Phase (90) enthält, der ebenfalls ausgehend vom Differenzsignal geregelt wird.

FIG. 1

FIG. 6

FIG. 2

FIG. 3

FIG. 4

FIG. 5

FIG. 7

FIG. 8

21

FIG. 9